(19) Europäisches Patentamt / European Patent Office / Office européen des brevets

(11) **EP 3 297 961 B1**

(12) **EUROPEAN PATENT SPECIFICATION**

(45) Date of publication and mention of the grant of the patent:
**19.06.2019 Bulletin 2019/25**

(21) Application number: **16728143.5**

(22) Date of filing: **17.05.2016**

(51) Int Cl.:
**C03B 17/06** *(2006.01)*

(86) International application number:
**PCT/US2016/032809**

(87) International publication number:
**WO 2016/187173 (24.11.2016 Gazette 2016/47)**

(54) **TENSION CONTROL IN GLASS MANUFACTURING APPARATUSES**

SPANNUNGSREGELUNG BEI VORRICHTUNGEN ZUR GLASHERSTELLUNG

CONTRÔLE DE TENSION DANS DES APPAREILS DE FABRICATION DE VERRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.05.2015 US 201562163039 P**

(43) Date of publication of application:
**28.03.2018 Bulletin 2018/13**

(73) Proprietor: **Corning Incorporated**
**Corning, New York 14831 (US)**

(72) Inventors:
  • **ABURADA, Tomohiro**
    **Painted Post, New York 14870 (US)**
  • **AMADON, Jeffrey Robert**
    **Lexington, Kentucky 40517 (US)**
  • **KOGGE, Chris Scott**
    **Danville, Kentucky 40422 (US)**
  • **KUDVA, Gautam Narendra**
    **Horseheads, New York 14845 (US)**
  • **NISHIMOTO, Michael Yoshiya**
    **Horseheads, New York 14845 (US)**
  • **ZHANG, Rui**
    **Elmira, New York 14903 (US)**

(74) Representative: **Sturm, Christoph**
**Quermann Sturm Weilnau**
**Patentanwälte Partnerschaft mbB**
**Unter den Eichen 5**
**65195 Wiesbaden (DE)**

(56) References cited:
**WO-A1-2014/051984      WO-A1-2014/179422**
**WO-A1-2015/029669      WO-A1-2016/007448**
**JP-A- 2011 016 705      US-A1- 2013 133 371**
**US-A1- 2013 319 050**

EP 3 297 961 B1

**Description**

**TECHNICAL FIELD**

The present disclosure relates to glass manufacturing and, in particular, to a glass manufacturing apparatus and methods for manufacturing a glass ribbon having improved tension control.

**BACKGROUND**

Standard fusion forming processes with multi-elevation drive systems may include various pulling roll configurations (e.g., Dual Elevation Drive Systems (DEDS) and Triple Elevation Drive Systems (TEDS)) that offer lateral and vertical mechanical tension control of the glass ribbon within the setting zones inside of the fusion draw section of a fusion draw machine. These pulling roll configurations may, also, provide isolation of the glass ribbon in the setting zones from perturbation coming from glass sheet snap off by a hot end robot at the bottom of the draw (BOD). Since the BOD end of the ribbon is free hanging in many of these standard fusion forming processes, meaning no constraint at the downstream end of the ribbon, the ribbon below the lowest roll in the draw section is always under tension due to weight of the glass ribbon.

In some ultra-thin glass fusion forming processes, the glass ribbon bends at an angle to horizontal (e.g. when the ribbon changes from a generally vertical orientation to a generally horizontal orientation), entering to a free loop (as opposed to being snapped off into individual sheets). The glass ribbon between the lowest roll in a pulling roll configuration and a nip roller at horizontal bead removal (HBR) or winder may be controlled based on the web height at a free loop. In this scheme, the web tension between the driven rolls may be determined by the free loop shape. Thus, the glass ribbon below the lowest pulling roll may be under lower tension than in a standard fusion draw, due to upward force from the free loop shape. Such low tension at the lowest pulling roll can induce potential buckling of the glass ribbon upon perturbation that can undesirably impact one or more attributes of the glass substrate.

Current web conveyance schemes in the BOD can also inhibit isolation of glass ribbon perturbations between the process steps. Process instability in one process step can thus negatively impact other process steps. Thus, there is still a desire to enhance the glass manufacturing apparatuses and methods to have a configuration that is beneficial for a wide-range of process applications.

WO 2014/051984 A1 discloses a forming device for forming a glass ribbon. The forming device comprises a first pull roll device located in a draw zone of the forming device and a second pull roll device located in a catenary zone downstream from the first pull roll device. The first pull roll device comprises first pull roll apparatus and a second pull roll apparatus. The second pull roll device comprises a first lower roll and a second lower roll.

US 2013/0133371 A1 and US 2013/0319050 A1 disclose further glass manufacturing apparatuses with a forming device to produce a glass ribbon, at least two pull roll apparatuses to draw the ribbon and a control device to control torque and/or angular velocity of draw rolls.

**SUMMARY**

The present concept involves glass manufacturing apparatuses and methods of forming ultra-thin glass substrates via controlling web tension, using driven rolls implemented in multiple elevations, such as two or three sets of driven rolls in a draw zone of the glass manufacturing apparatuses and two or more sets of driven rolls in a catenary zone. The driven rolls in the draw section can control setting zone tension. Additional driven rolls at the bottom of the draw can be implemented to improve current glass forming apparatuses and methods. The driven rolls may be located downstream of the draw zone, the entrance of the catenary (catenary top roll (CTR)) and exit of catenary (catenary bottom roll (CBR)). This tension control scheme can enable vertical tension control from the root of a forming apparatus to an isolation area or free loop downstream of the draw zone. In addition, the ribbon tension can be adjusted to provide that the bottom catenary roll serve as a "grounding or pivot roll" against which an isolation area (free loop) can capture all process upsets without propagating them upstream into the draw zone, referred to herein as isolating the free loop from the draw zone.

According to a first aspect, a glass manufacturing apparatus being a down draw fusion apparatus includes a forming device configured to produce a glass ribbon including a width extending between a first edge and an opposite second edge of the glass ribbon. A first pull roll device is located in a draw zone of the glass manufacturing apparatus. The first pull roll device includes a first pull roll apparatus including a first pair of draw rolls arranged and configured to draw the first edge of the glass ribbon from the forming device along a draw path extending transverse to the width of the glass ribbon. A second pull roll apparatus is downstream of the first pull roll apparatus and includes a first pair of draw rolls arranged and configured to draw the first edge of the glass ribbon along the draw path. A second pull roll device is located in a catenary zone of the glass manufacturing apparatus downstream from the first pull roll device. The second pull roll device includes a first pull roll apparatus including a first pair of draw rolls arranged and configured to interact with the first edge of the glass ribbon and to support weight of the glass ribbon. A second pull roll apparatus is located downstream of the first pull apparatus of the second pull roll device and includes a first pair of drive rolls configured to interact with the first edge of the glass ribbon to support weight of the glass ribbon. A control device is configured to operate at least the second pull roll apparatus of the second pull roll device such that the first pair of drive rolls of the second pull roll apparatus of the second pull roll device provides a downward pull force to the glass ribbon at an exit of the catenary zone.

According to a second aspect, there is provided the apparatus of aspect 1, wherein the first pair of draw rolls of at least one of the first pull roll apparatus and the second pull roll apparatus of the first pull roll device is arranged at an angle to horizontal (e.g., non-horizontally) to apply a lateral tension to the glass ribbon.

According to a third aspect, there is provided the apparatus of aspect 1 or aspect 2, wherein the first pair of draw rolls of at least one of the first pull roll apparatus and the second pull roll apparatus of the second pull roll device are arranged substantially horizontal.

According to a fourth aspect, there is provided the apparatus of any one of aspects 1-3, wherein the control device is configured to operate the first pull roll apparatus of the second pull roll device such that the first pair of drive rolls of the first pull roll apparatus of the second pull roll device provides an upward pull force to the glass ribbon at an entrance of the catenary zone.

According to a fifth aspect, there is provided the apparatus of any one of aspects 1-4, wherein the control device is configured to operate the first pull roll apparatus of the first pull roll device such that the first pair of drive rolls of the first pull apparatus of the first pull roll device rotates at a substantially constant torque.

According to a sixth aspect, there is provided the apparatus of any one of aspects 1-5, wherein the control device is configured to operate the second pull roll apparatus of the first pull roll device such that the first pair of drive rolls of the second pull roll apparatus of the first pull roll device rotate at a substantially constant angular velocity.

According to a seventh aspect, a method of manufacturing a glass ribbon is provided. The method includes providing a first pull roll device located in a draw zone of the glass manufacturing apparatus, namely a down draw fusion apparatus. A second pull roll device, located in a catenary zone of the glass manufacturing apparatus, is provided downstream from the first pull roll device. The second pull roll device includes a first pull roll apparatus including a first pair of draw rolls arranged and configured to interact with the first edge of the glass ribbon and to support weight of the glass ribbon. A second pull roll apparatus is located downstream of the first pull roll apparatus of the second pull roll device including a first pair of drive rolls configured to interact with the first edge of the glass ribbon and support weight of the glass ribbon. At least the second pull roll apparatus of the second pull roll device is controlled using a control device such that the first pair of drive rolls of the second pull roll apparatus of the second pull roll device provides a downward pull force to the glass ribbon at an exit of the catenary zone.

According to an eighth aspect, there is provided the method of aspect 7, wherein the first pull roll device includes a first pull roll apparatus including a first pair of draw rolls arranged and configured to draw the first edge of the glass ribbon from the forming device along a draw path extending transverse to the width of the glass ribbon. A second pull roll apparatus is located downstream of the first pull roll apparatus of the first pull roll device including a first pair of draw rolls arranged and configured to draw the first edge of the glass ribbon along the draw path.

According to a ninth aspect, there is provided the method of aspect 8, comprising controlling the first pull roll apparatus of the first pull roll device using the control device such that the first pair of drive rolls of the first pull apparatus of the first pull roll device rotate at a substantially constant torque.

According to a tenth aspect, there is provided the method of any one of aspects 7-9, comprising controlling the second pull roll apparatus of the first pull roll device using the control device such that the first pair of drive rolls of the second pull apparatus of the first pull roll device rotate at a substantially constant angular velocity.

According to an eleventh aspect, there is provided the method of aspect 8, wherein the first pair of draw rolls of at least one of the first pull roll apparatus and the second pull roll apparatus of the first pull roll device are arranged at an angle to horizontal to apply a lateral tension to the glass ribbon.

According to a twelfth aspect, there is provided the method of any one of aspects 8-11, wherein the first pair of draw rolls of at least one of the first pull roll apparatus and the second pull roll apparatus of the second pull roll device are arranged substantially horizontal.

According to a thirteenth aspect, there is provided the method of aspect 7, comprising controlling the first pull roll apparatus of the second pull roll device using the control device such that the first pair of drive rolls of the first pull roll apparatus of the second pull roll device provides an upward pull force to the glass ribbon at an entrance of the catenary zone.

Additional features and advantages will be set forth in the detailed description which follows, and in part will be readily apparent to those skilled in the art from the description or recognized by practicing the embodiments as exemplified in the written description and the appended drawings and as defined in the appended claims. It is to be understood that both the foregoing general description and the following detailed description are merely exemplary embodiments of the appended claims and are intended to provide an overview or framework to understanding the nature and character of the appended claims.

The accompanying drawings are included to provide a further understanding of principles of the described embodiments and appended claims, and are incorporated in and constitute a part of this specification. The drawings illustrate one or more embodiment(s), and together with the description serve to explain, by way of example, principles and operation of the claimed invention. It is to be understood that various features of the embodiments disclosed in this specification and in the drawings can be used in any and all combinations.

## BRIEF DESCRIPTION OF THE DRAWINGS

FIG. 1 is a schematic view of an embodiment of a flexible glass forming method and apparatus;

FIG. 2 is a schematic view of portions of the glass manufacturing apparatus of FIG. 1 including an embodiment of a pull roll device;

FIG. 3 is a schematic view of portions of the glass manufacturing apparatus of FIG. 1 including another embodiment of a pull roll device;

FIG. 4 illustrates both front and side views of the glass manufacturing apparatus of the portions of FIGS. 2 and 3 schematically; and

FIG. 5 illustrates an exemplary tension diagram for an exemplary glass forming process where tension along the glass ribbon is plotted over distance.

## DETAILED DESCRIPTION

In the following detailed description, for purposes of explanation and not limitation, example embodiments disclosing specific details are set forth to provide a thorough understanding of various principles of the present disclosure. However, it will be apparent to one having ordinary skill in the art, having had the benefit of the present disclosure, that the present disclosure may be practiced in other embodiments that depart from the specific details disclosed herein. Moreover, descriptions of well-known devices, methods and materials may be omitted so as not to obscure the description of various principles of the present disclosure. Finally, wherever applicable, like reference numerals refer to like elements.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

As used herein, the singular forms "a," "an" and "the" include plural referents unless the context clearly dictates otherwise. Thus, for example, reference to a "component" includes aspects having two or more such components, unless the context clearly indicates otherwise.

Embodiments described herein generally relate to glass manufacturing apparatuses and methods for manufacturing a glass ribbon having improved tension control, particularly within a catenary zone downstream of a draw zone where a glass ribbon is drawn from a root of a fusion draw apparatus and also drawn to a desired thickness. Driven rollers may be located downstream of the draw zone, at the entrance and exit of the catenary zone. Such an arrangement can allow for vertical tension control of the glass ribbon from the root through, for example, a free loop that is located adjacent and downstream of the catenary zone. From the free loop, the glass ribbon may enter any number of apparatuses and processes, such as a winder and/or edge removal apparatus.

While glass is generally known as a brittle material, inflexible and prone to scratching, chipping and fracture, glass having a thin cross section can in fact be quite flexible, to the extent that glass in long thin sheets or ribbons can be wound and un-wound from rolls, much like paper or plastic film. Instabilities, perturbations, vibrations, and transient effects that may be introduced to the glass ribbon in the manufacturing environments, such as during downstream processing and handling while the glass is still in ribbon form, may cause intermittent or extended misalignment of the glass ribbon to occur. In extreme cases, the instabilities, perturbations, vibrations, and transient effects of the glass ribbon may lead to fracture of the glass ribbon. Thus, it can be beneficial to provide isolation between various ribbon processing zones to inhibit transmission of instabilities, perturbations, vibrations and transient effects from the source, along the glass ribbon, up and down the glass ribbon to other processes.

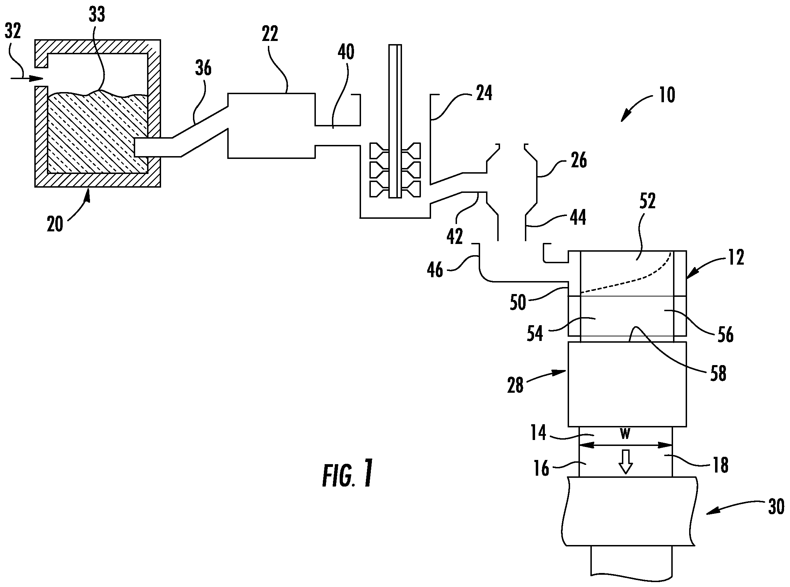

Referring to FIG. 1, a schematic view of an embodiment of an exemplary glass manufacturing apparatus 10 is illustrated as a down draw fusion apparatus, although other glass forming apparatuses, for example, a slot draw apparatus, may be used in other examples. In the invention the apparatus is a down draw fusion apparatus. The exemplary glass manufacturing apparatus 10 may include a forming device 12 to produce a glass ribbon 14 including a width W extending between a first edge 16 and a second edge 18.

The glass manufacturing apparatus 10 can include a melting vessel 20, a fining vessel 22, a mixing vessel 24, a delivery vessel 26, the forming device 12 and pull roll devices (represented by elements 28 and 30). The melting vessel 20 may be where glass batch materials are introduced as shown by arrow 32 and melted to form molten glass 33. The fining vessel 22 has a high temperature processing area that receives the molten glass 33 from the melting vessel 20 through an inclined tube 36 and in which bubbles are removed from the molten glass 33. The fining vessel 22 is connected to the mixing vessel 24 by a finer to stir chamber connecting tube 40. The mixing vessel 24 is connected to the delivery vessel 26 by a stir chamber to bowl connecting tube 42. The delivery vessel 26 delivers the molten glass 33 through a downcomer 44 to an inlet 46 and into the forming device 12.

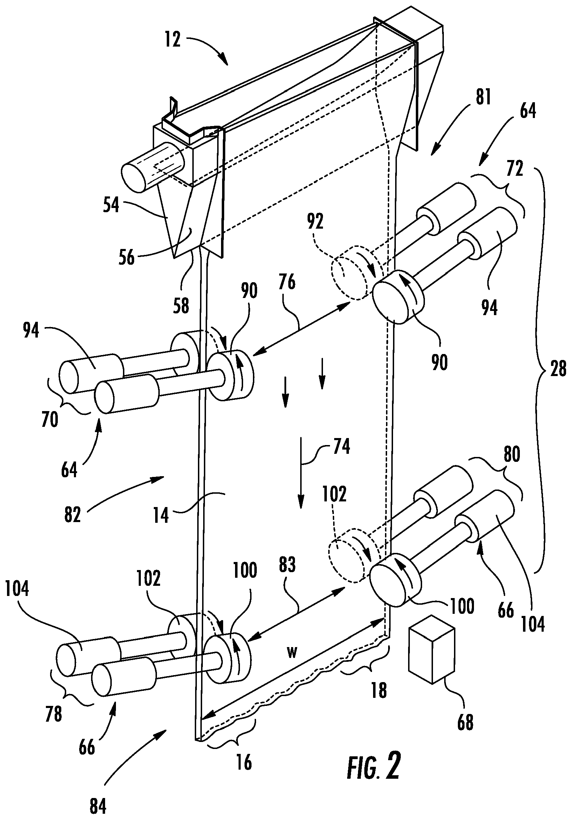

There may be various forming devices which may be used in accordance with aspects of the disclosure. For example, as shown in FIGS. 1 and 2, the exemplary forming device 12 includes an opening 50 that receives the molten glass 33 which flows into a trough 52. As best shown in FIG. 2, the molten glass 33 then overflows from the trough 52 and runs down two opposite sides 54 and 56 of the forming device 12 before fusing together at a root 58 of the forming device 12. The root 58 is where the two sides 54 and 56 come together and where the two overflow walls of molten glass 33 flowing over each of the two sides 54 and 56 fuse together to form the glass ribbon 14 which is drawn downward off the root 58.

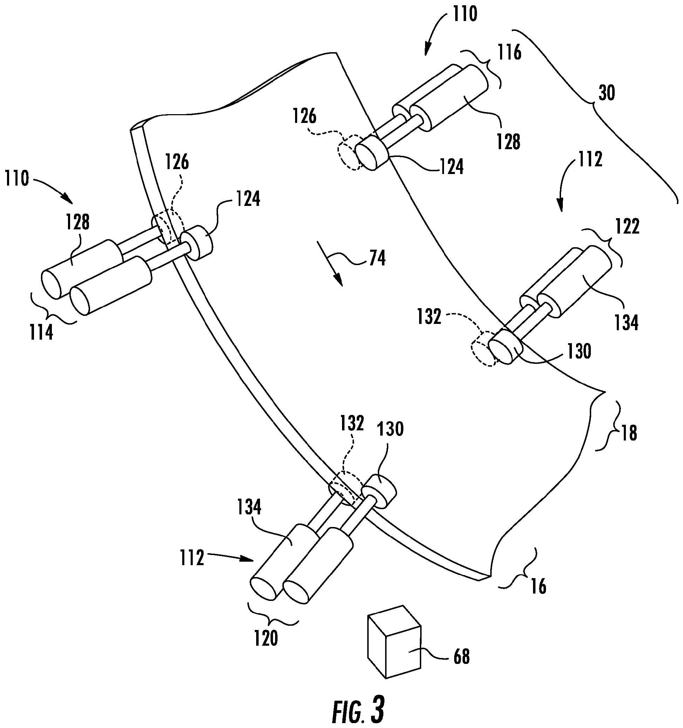

The glass manufacturing apparatus 10 may further include the pull roll devices 28 and 30 which are both schematically illustrated in FIG. 1. As will be discussed more fully below with respect to FIGS. 2 and 3, the pull roll device 28 is provided to help draw the glass ribbon 14 from the root 58 and also draw the glass ribbon 14 to the desired thickness. The pull roll device 30 is provided to maintain vertical and horizontal ribbon tension within a catenary zone 60 downstream of the forming device 12 and upstream of a free loop 62 of the glass ribbon 14.

In embodiments where the flexible glass ribbon 14 is formed using a down draw fusion process, the first and second edges 16 and 18 may include beads with a thickness that is greater than a thickness within a central portion of the ribbon. The central portion may be "ultra-thin" having a thickness of about 0.3 mm or less including but not limited to thicknesses of, for example, about 0.01-0.05 mm, about 0.05-0.1 mm, about 0.1-0.15 mm and about 0.15-0.3 mm, although flexible glass ribbons 34 with other thicknesses maybe formed in other examples.

Referring to FIG. 2, a more detailed schematic is provided of the pull roll device 28 in accordance with one example of the disclosure. The exemplary pull roll device 28 can include a first roll apparatus 64, a second roll apparatus 66 and a control device 68 (e.g., programmable logic controller, processor-memory etc.). In some embodiments, the pull roll device 28 may include a third or more pull roll apparatuses. For example, an additional pull roll apparatus may be provided upstream of the first pull roll apparatus 64. In this example, the first pull roll apparatus 64 may include a first pair of draw rolls 70 and a second pair of draw rolls 72 configured to respectively draw the first edge 16 and the second edge 18 of the glass ribbon 14 from the forming device 12 along a draw path 74 extending transverse to the width W of the glass ribbon 14 (note: the draw rolls 70 and 72 are shown as being vertically down-tilted rolls and applying a cross-tension 76 in the glass ribbon 14 but they could have a horizontal orientation and if they have a horizontal orientation then they could be connected to one another).

The second roll apparatus 66 includes a first pair of rolls 78 and a second pair of rolls 80 which are respectively positioned downstream along the draw path 74 from the first pair of draw rolls 70 and the second pair of draw rolls 72 (note: the rolls 78 and 80 are shown as being vertically down-tilted rolls and applying a cross-tension 83 in the glass ribbon 14 but they could have a horizontal orientation and if they have a horizontal orientation then they could be connected to one another). In one embodiment, the control device 68 is configured at least to independently operate the first roll apparatus 64 and the second roll apparatus 66 such that at least one of the pair of draw rolls 70, 72 rotates with a substantially constant torque and at least one of the pair of draw rolls 78, 80 rotates with a substantially constant angular velocity.

There are various schematics of the forming device 12 and the pull roll device 28 in accordance with several examples of the disclosure. The pull roll device may 28 operate to draw the glass ribbon 14 from the root 58 of the forming device 12 into a viscous zone 81 wherein the glass ribbon 14 begins thinning to a final thickness. The glass ribbon 14 may then be drawn from the viscous zone 81 into a setting zone 82. In the setting zone 82, the portion of the glass ribbon 14 is set from a viscous state to an elastic state with the desired profile. The setting zone 82 can be defined as the zone where the temperatures satisfy the following

$$0.2 \, sec < \frac{\eta(T)}{G} < 1000 \, sec,$$

with $\eta$ being the glass viscosity (Pa sec), T being the temperature (°C) and G being the room temperature shear modulus (Pa) of the glass ribbon 14. The glass ribbon 14 can then be drawn from the setting zone 82 to an elastic zone 84. Once in the elastic zone 84, the glass ribbon 14 may be deformed, within limits, without permanently changing the profile of the glass ribbon 14. In this example, the pull roll device 28 is configured such that the first pair of draw rolls 70 and the second pair of draw rolls 72 are located in the viscous zone 81 and the first pair of draw rolls 78 and the second pair of draw rolls 80 are located in the setting and/or elastic zone 82, 84.

Each of the first and second pair of draw rolls 70, 72 can include a first pull roll member 90 and a second pull roll member 92. The first and second pull roll members 90 and 92 can each be provided with a refractory roll covering, and respective pairs of them (i.e., first pair of draw rolls 70 and second pair of draw rolls 72) are arranged to engage the first and second edges 16 and 18 of the glass ribbon 14 therebetween. At least one of the first and second pull roll members 90 and 92 in each pair of draw rolls 70, 72 may be provided with a respective motor 94. For example, as shown, the first pull roll member 90 of the second pair of draw rolls 72 is provided with a motor 94 whereas the second pull roll member 92 of the second pair of draw rolls 72 is provided with a bearing such that only one of the first and second pull roll members 90 or 92 is driven and the other rolls from contact with glass ribbon and pinch force with the other roller. Similarly, the second pull roll member 92 of the first pair of draw rolls 70 is provided with a motor 94, whereas the first pull roll member 90 of the first pair of draw rolls 70 is provided with a bearing such that only one of the first and second pull roll members 90 or 92 is driven and the other rolls from contact with the glass ribbon and pinch force with the other roll. In further examples, both of the first and second pull roll members 90 or 92 in one pair of draw rolls (for example either the first pair of draw rolls 70, the second pair of draw rolls 72, or both pairs of draw rolls 70, 72) may be provided with a motor.

The pull roll device 28 may further include the second roll apparatus 66 including the first and second pair of draw rolls 78 and 80 positioned downstream along the draw path 74 from the pair of rolls 70, 72. The first and second pair of draw rolls 78 and 80 may be configured to further draw the first and second edges 16 and 18 of the glass ribbon 14 along the draw path 74. As shown, each of the first and second pair of draw rolls 78 and 80 can include a first pull roll member 100 and a second pull roll member 102. The first and second pull roll members 100 and 102 can each be provided with a respective refractory roll covering and respective pairs of them (i.e., first pair of draw rolls 78 and second pair of draw rolls 80) are arranged to engage the first and second edges 16 and 18 of the glass ribbon 14 therebetween. At least one of the first and second pull roll members 100 and 102 in each pair of draw rolls 78, 80 may be provided with a respective motor 104. For example, as shown, the first pull roll member 100 of the second pair of draw rolls 80 is provided with a motor 104, whereas the second pull roll member 102 of the second pair of draw rolls 80 is provided with a bearing such that only one of the first and second pull roll members 100 or 102 is driven and the other rolls from contact with the glass ribbon and pinch force with the other roll. In further examples, both of the first and second pull roll members 100 or 102 in one pair of draw rolls (for example either the first pair of draw rolls 78, the second pair of draw rolls 80, or both pairs of draw rolls 78, 80) may be provided with a motor.

Referring to FIG. 3, a more detailed schematic is provided of the pull roll device 30 in accordance with one example of the disclosure. The exemplary pull roll device 30 can include a first roll apparatus 110 (sometimes referred to as a catenary top roll (CTR) apparatus), a second roll apparatus 112 (sometimes referred to as a catenary bottom roll (CBR) apparatus) and the control device 68. In this example, the first roll apparatus 110 may include a first pair of draw rolls 114 and a second pair of draw rolls 116 configured to respectively draw the first edge 16 and the second edge 18 of the glass ribbon 14 from the elastic zone 84 along the draw path 74 (note: the draw rolls are shown as being horizontal rolls, but they could have a tilted orientation, such as in FIG. 2, to apply a crosswise tension to the glass ribbon 14).

The second roll apparatus 112 includes a first pair of draw rolls 120 and a second pair of draw rolls 122 which are respectively positioned downstream along the draw path 74 from the first pair of draw rolls 114 and the second pair of draw rolls 116 (note: the rolls are shown as being horizontal rolls, but they could have a tilted orientation, such as in FIG. 2, to apply a crosswise tension to the glass ribbon). The control device 68 is configured to independently operate the first roll apparatus 110 and the second roll apparatus 112 along with the upstream first roll apparatus 64 and second roll apparatus 66. While multiple configurations are possible, the control device 68 may operate the first and second roll apparatuses 64, 66, 110 and 112 to operate at any one of a constant torque (upward or downward), constant velocity and idle. The Table below provides several configurations for the first and second roll apparatuses 64, 66, 110 and 112, each being used to isolate the flexible glass ribbon within zone 82 from downstream perturbations. The configurations provided by the Table are merely exemplary and not meant to be limiting.

Table

|  | | Roll Apparatus 64 | Roll Apparatus 66 | Roll Apparatus 110 | Roll Apparatus 112 |
|---|---|---|---|---|---|
| #1 | | Constant up/downward torque | Constant velocity | Constant up/downward torque | Constant up/downward torque |
| #2 | | Constant up/downward torque | Constant velocity | Idle | Constant up/downward torque |
| #3 | | Constant up/downward torque | Constant up/downward torque | Constant up/downward torque | Constant velocity |
| #4 | | Constant up/downward torque | Constant up/downward torque | Idle | Constant velocity |
| #5 | | Constant velocity | Constant up/downward torque | Constant up/downward torque | Constant up/downward torque |
| #6 | | Constant velocity | Constant up/downward torque | Idle | Constant up/downward torque |
| #7 | | Constant up/downward torque | Constant up/downward torque | Constant velocity | Constant up/downward torque |
| #8 | | Constant up/downward torque | Constant up/downward torque | Constant velocity | Constant up/downward torque |

Each of the first and second pair of draw rolls 114, 116 can include a first pull roll member 124 and a second pull roll member 126. The first and second pull roll members 124 and 126 can each be provided with a respective refractory roll covering and respective pairs of them (i.e., first pair of draw rolls 114 and second pair of draw rolls 116) are arranged to engage the first and second edges 16 and 18 of the glass ribbon 14 therebetween. Alternatively, because the second pull roll device 30 is located at a portion of the apparatus wherein temperatures of the glass ribbon are substantially reduced from those near the viscous or setting zones, the first and second pull roll members 124, 126 may be provided with a covering material other than refractory, for example, silicone rubber. At least one of the first and second pull roll members 124 and 126 in each pair of draw rolls 114, 116 may be provided with a respective motor 128. For example, as shown, the first roll member 124 of the second pair of draw rolls 116 is provided with a motor 128, whereas the second pull roll member 126 of the second pair of draw rolls 116 is provided with a bearing such that only one of the first and second pull roll members 124 or 126 is driven and the other rolls from contact with the glass ribbon and pinch force with the other roll. Similarly, the second pull roll member 126 of the first pair of draw rolls 114 is provided with a motor 128, whereas the first pull roll member 124 of the first pair of drive rolls 114 is provided with a bearing such that only one of the first and second pull roll members 124 or 126 is driven and the other rolls from contact with the glass ribbon and pinch force with the other roll. In further examples, both the first and second pull roll members 124 or 126 in one pair of draw rolls (for example either the first pair of draw rolls 114, the second pair of draw rolls 116, or both pairs of draw rolls 114, 116) may be provided with a motor.

The pull roll device 30 may further include the second roll apparatus 112 including the first and second pair of draw rolls 120 and 122 positioned downstream along the draw path 74 from the upstream pair of rolls 114, 116. The first and second pair of draw rolls 120 and 122 may be configured to further draw the first and second edges 16 and 18 of the glass ribbon 14 along the draw path 74. As shown, each of the first and second pair of draw rolls 120 and 122 can include a first pull roll member 130 and a second pull roll member 132. The first and second pull roll members 130 and 132 can each be provided with a respective refractory roll covering and respective pairs of them (i.e., first pair of draw rolls 120 and second pair of draw rolls 122) are arranged to engage the first and second edges 16 and 18 of the glass ribbon 14 therebetween. Alternatively, because the second pull roll device 30 is located at a portion of the apparatus wherein temperatures of the glass ribbon are substantially reduced from those near the viscous or setting zones, the first and second pull roll members 130, 132 may be provided with a covering material other than refractory, for example, silicone rubber. At least one of the first and second pull roll members 130 and 132 in each pair of draw rolls 120, 122 may be provided with a respective motor 134. For example, as shown, the first pull roll member 130 of the second pair of draw rolls 122 is provided with a motor 134, whereas the second pull roll member 132 of the second pair of draw rolls 122 is provided with a bearing such that only one of the first and second pull roll members 130 or 132 is driven and the other rolls from contact with the glass ribbon and pinch force with the other roll. Similarly, the second pull roll member 132 of the first pair of draw rolls 120 is provided with a motor 134, whereas the first pull roll member 130 of the first pair of drive rolls 120 is provided with a bearing such that only one of the first and second pull roll members 130 or 132 is driven and the other rolls from contact with the glass ribbon and pinch force with the other roll. In further examples, both the first and second pull roll members 130 or 132 in one pair of draw rolls (for example either the first pair of draw rolls 120, the second pair of draw rolls 122, or both pairs of draw rolls 120, 122) may be provided with a motor.

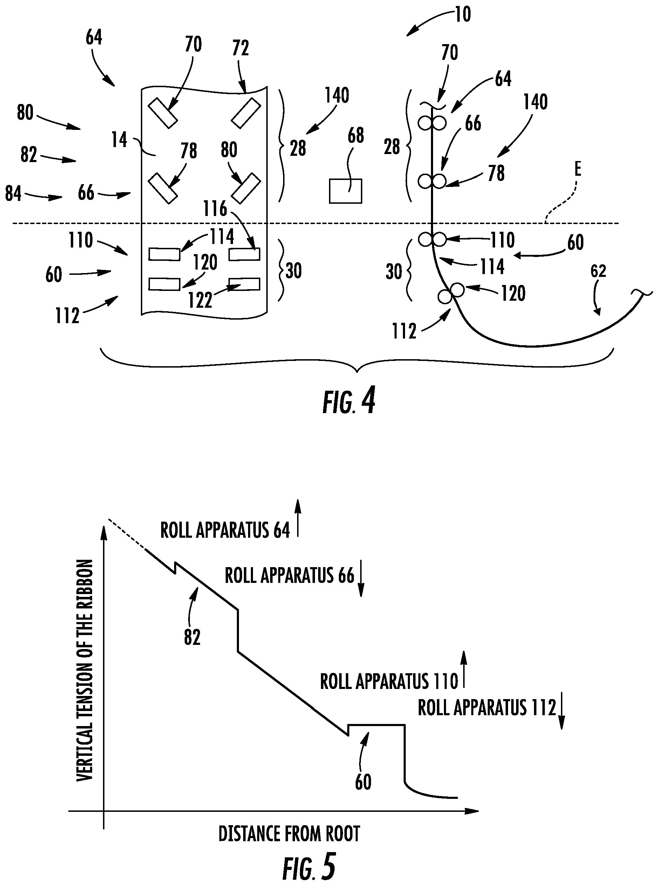

Referring now to FIG. 4, both front and side views of the glass manufacturing apparatus 10 are schematically illustrated including the viscous, setting and elastic zones 81, 82 and 84, which maybe collectively referred to as a draw zone 140 where the pull roll device 28 is located and the catenary zone 60 where the pull roll device 30 is located. An imaginary line E symbolizes an exit from the draw zone 140 to the catenary zone 60.

The control device 68 may be provided to independently operate one or more of the first and second roll apparatuses 64 and 66 of the pull roll device 28 and first and second roll apparatuses 110 and 112 of the pull roll device 30. As one example, the control device 68 may operate the first and second pair of draw rolls 70 and 72 of the first roll apparatus 64 to rotate with a substantially constant torque and the first and second pair of draw rolls 78 and 80 of the second roll apparatus 66 with a substantially constant angular velocity. As another example, the control device 68 may operate the first and second pair of drive rolls 120 and 122 of the second roll apparatus 112 to have a substantial constant torque or substantially constant angular velocity, while the first and second pair of draw rolls 114 and 116 of the first roll apparatus 110 are idle, driven with constant angular velocity or constant torque (see the Table above). Independent operation of the first and second roll apparatuses 64 and 66 of the pull roll device 28 and first and second roll apparatuses 110 and 112 of the pull roll device 30 means that one of the first and second roll apparatuses 64, 110 and 66, 112 may be operated without being affected by operation of one or more of the others of the first and second roll apparatuses 64, 110 and 66, 112.

Referring to FIG. 5, a tension diagram is illustrated for an exemplary glass forming process using the glass manufacturing apparatus 10 where tension along the glass ribbon 14 is plotted over distance from the root 58 (FIG. 1). FIG. 5 corresponds to the configuration #1 in the Table above with upward torque for both roll apparatuses 64 and 110 as an example. The vertical arrows of FIG. 5 indicate the direction of the torque applied. In this particular example, the torque control driven roll apparatus 64 applies an upward pull force to apply a desired tension to zone 82. As used herein, the term "upward pull force" refers to a force providing a tensile force downstream of the particular roll apparatus, while a "downward pull force" refers to a force providing a compressive force downstream of the particular roll apparatus. The velocity control driven roll apparatus 66 controls thickness of the glass ribbon. Both roll apparatuses 110 and 112 are driven and controlled by torque to apply sufficient tension in zone 60 to isolate zone 82 from downstream perturbations and also to provide the catenary zone. The tension between zones 82 and 60 is also managed by the difference in pull force of roll apparatuses 66 and 110 to avoid buckling of the glass ribbon.

The first roll apparatus 110 and second roll apparatus 112 located in the catenary zone 60 can enable isolation of tension within the catenary zone 60 from the free loop tension, which can isolate perturbations within the free loop 62 from upstream processes. Since tension in the glass ribbon 14 just upstream of the first roll apparatus 110 may be lower than the tension in the catenary zone 60, the first roll apparatus may apply an upward pull force to the glass ribbon 14. At the exit of the catenary zone 60, the second roll apparatus 112 can apply a downward pull force to reduce the tension downstream to establish the web path for the free loop 62.

It should be emphasized that the above-described embodiments, particularly any "preferred" embodiments, are merely possible examples of implementations, merely set forth for a clear understanding of various principles of the claimed invention. Many variations and modifications may be made to the above-described embodiments. All such modifications and variations are intended to be included herein within the scope of this disclosure and the following claims.

**Claims**

1. A glass manufacturing apparatus (10), namely a down draw fusion apparatus, comprising:

    a forming device (12) configured to produce a glass ribbon (14) including a width extending between a first edge (16) and an opposite second edge (18) of the glass ribbon (14);
    a first pull roll device (28) located in a draw zone (140) of the glass manufacturing apparatus (10), the first pull roll device (28) comprising:

       a first pull roll apparatus (64) comprising a first pair of draw rolls (70) arranged and configured to draw the first edge (16) of the glass ribbon (14) from the forming device along a draw path (74) extending transverse to the width of the glass ribbon (14); and
       a second pull roll apparatus (66) downstream of the first pull roll apparatus (64) comprising a first pair of draw rolls (78) arranged and configured to draw the first edge (16) of the glass ribbon (14) along the draw path (74); and

a second pull roll device (30) located in a catenary zone (60) of the glass manufacturing apparatus (10) downstream from the first pull roll device (28), the second pull roll device (30) comprising:

> a first pull roll apparatus (110) comprising a first pair of draw rolls (114) arranged and configured to interact with the first edge (16) of the glass ribbon (14) and to support weight of the glass ribbon (14); and
> a second pull roll apparatus (112) located downstream of the first pull apparatus (110) of the second pull roll device (30) comprising a first pair of drive rolls (120) configured to interact with the first edge (16) of the glass ribbon (14) and support weight of the glass ribbon (14); and

> a control device (68) configured to operate at least the second pull roll apparatus (112) of the second pull roll device (30) such that the first pair of drive rolls (120) of the second pull roll apparatus (112) of the second pull roll device (30) provides a downward pull force to the glass ribbon (14) at an exit of the catenary zone (60).

2. The glass manufacturing apparatus of claim 1, wherein the first pair of draw rolls (70, 78) of at least one of the first pull roll apparatus (64) and the second pull roll apparatus (66) of the first pull roll device (28) is arranged at an angle to horizontal to apply a lateral tension to the glass ribbon (14).

3. The glass manufacturing apparatus of claim 1 or 2, wherein the first pair of draw rolls (114, 120) of at least one of the first pull roll apparatus (110) and the second pull roll apparatus (112) of the second pull roll device (30) are arranged substantially horizontal.

4. The glass manufacturing apparatus of any one of claims 1-3, wherein the control device (68) is configured to operate the first pull roll apparatus (110) of the second pull roll device (30) such that the first pair of drive rolls (114) of the first pull roll apparatus (110) of the second pull roll device (30) provides an upward pull force to the glass ribbon (14) at an entrance of the catenary zone (60).

5. The glass manufacturing apparatus of any one of claims 1-4, wherein the control device (68) is configured to operate the first pull roll apparatus (64) of the first pull roll device (28) such that the first pair of drive rolls (70) of the first pull apparatus (64) of the first pull roll device (28) rotates at a substantially constant torque.

6. The glass manufacturing apparatus of any one of claims 1-5, wherein the control device (68) is configured to operate the second pull roll apparatus (66) of the first pull roll device (28) such that the first pair of drive rolls (78) of the second pull apparatus (66) of the first pull roll device (28) rotate at a substantially constant angular velocity.

7. A method of manufacturing a glass ribbon (14) in a glass manufacturing apparatus (10), namely in a down draw fusion apparatus, the method comprising:

> providing a first pull roll device (28) located in a draw zone (140) of the glass manufacturing apparatus (10);
> providing a second pull roll device (30) located in a catenary zone (60) of the glass manufacturing apparatus (10) downstream from the first pull roll device (28), the second pull roll device (30) comprising:

>> a first pull roll apparatus (110) comprising a first pair of draw rolls (114) arranged and configured to interact with the first edge (16) of the glass ribbon (14) and to support weight of the glass ribbon (14); and
>> a second pull roll apparatus (112) located downstream of the first pull apparatus (110) of the second pull roll device (30) comprising a first pair of drive rolls (120) configured to interact with the first edge (16) of the glass ribbon (14) and support weight of the glass ribbon (14);

> controlling at least the second pull roll apparatus (112) of the second pull roll device (30) using a control device (68) such that the first pair of drive rolls of the second pull roll apparatus (112) of the second pull roll device (30) provides a downward pull force to the glass ribbon (14) at an exit of the catenary zone (60);
> forming the glass ribbon (14).

8. The method of claim 7, wherein the first pull roll device (28) comprises:

> a first pull roll apparatus (64) comprising a first pair of draw rolls (70) arranged and configured to draw the first edge (16) of the glass ribbon (14) from the forming device along a draw path (74) extending transverse to the width of the glass ribbon (14); and
> a second pull roll apparatus (66) downstream of the first pull roll apparatus of the first pull roll device (28) comprising a first pair of draw rolls (78) arranged and configured to draw the first edge (16) of the glass ribbon (14) along the draw path (74).

9. The method of claim 8 comprising controlling the first pull roll apparatus (64) of the first pull roll device (28) using the control device (68) such that the first pair of drive rolls of the first pull apparatus (64) of the first pull roll device (28) rotate at a substantially constant torque.

10. The method of claim 8 or claim 9 comprising controlling the second pull roll apparatus (66) of the first pull roll device (28) using the control device (68) such that the first pair of drive rolls of the second pull apparatus (66) of the first pull roll device (28) rotate at a substantially constant angular velocity.

11. The method of any one of claims 8-10, wherein the first pair of draw rolls (70, 78) of at least one of the first pull roll apparatus (64) and the second pull roll apparatus (66) of the first pull roll device (28) are arranged at an angle to horizontal to apply a lateral tension to the glass ribbon (14).

12. The method of any one of claims 8-11, wherein the first pair of draw rolls (114, 120) of at least one of the first pull roll apparatus (110) and the second pull roll apparatus (112) of the second pull roll device (30) are arranged substantially horizontal.

13. The method of claim 7 comprising controlling the first pull roll apparatus (110) of the second pull roll device (30) using the control device (68) such that the first pair of drive rolls of the first pull roll apparatus (110) of the second pull roll device (30) provides an upward pull force to the glass ribbon (14) at an entrance of the catenary zone (60).

**Patentansprüche**

1. Glasherstellungseinrichtung (10), insbesondere Downdraw-Fusion-Vorrichtung, umfassend:

eine Formvorrichtung (12) die dazu ausgelegt ist, ein Glasband (14) zu erzeugen, das eine Breite beinhaltet, die sich zwischen einer ersten Kante (16) und einer gegenüberliegenden zweiten Kante (18) des Glasbands (14) erstreckt;
eine erste Zugwalzenvorrichtung (28), die sich in einem Streckbereich (140) der Glasherstellungseinrichtung (10) befindet, wobei die erste Zugwalzenvorrichtung (28) Folgendes umfasst:

eine erste Zugwalzeneinrichtung (64), die ein erstes Paar Streckwalzen (70) umfasst, die dazu angeordnet und ausgelegt sind, die erste Kante (16) des Glasbands (14) von der Formvorrichtung entlang eines Streckwegs (74), der sich quer zur Breite des Glasbands (14) erstreckt, zu strecken; und
eine zweite Zugwalzeneinrichtung (66) stromabwärts der ersten Zugwalzeneinrichtung (64), die ein erstes Paar Streckwalzen (78) umfasst, die dazu angeordnet und ausgelegt sind, die erste Kante (16) des Glasbands (14) entlang des Streckwegs (74) zu strecken; und

eine zweite Zugwalzenvorrichtung (30), die sich in einem Kettenlinienbereich (60) der Glasherstellungseinrichtung (10) stromabwärts der ersten Zugwalzenvorrichtung (28) befindet, wobei die zweite Zugwalzenvorrichtung (30) Folgendes umfasst:

eine erste Zugwalzeneinrichtung (110), die ein erstes Paar Streckwalzen (114) umfasst, die dazu angeordnet und ausgelegt sind, mit der ersten Kante (16) des Glasbands (14) zusammenzuwirken und Gewicht des Glasbands (14) zu stützen; und
eine zweite Zugwalzeneinrichtung (112), die sich stromabwärts der ersten Zugeinrichtung (110) der zweiten Zugwalzenvorrichtung (30) befindet, die ein erstes Paar Antriebswalzen (120) umfasst, die dazu ausgelegt sind, mit der ersten Kante (16) des Glasbands (14) zusammenzuwirken und Gewicht des Glasbands (14) zu stützen; und

eine Steuervorrichtung (68), die dazu ausgelegt ist, zumindest die zweite Zugwalzeneinrichtung (112) der zweiten Zugwalzenvorrichtung (30) so zu betreiben, dass das erste Paar Antriebswalzen (120) der zweiten Zugwalzeneinrichtung (112) der zweiten Zugwalzenvorrichtung (30) an einem Ausgang des Kettenlinienbereichs (60) eine stromabwärtige Zugkraft auf das Glasband (14) bereitstellt.

2. Glasherstellungseinrichtung nach Anspruch 1, wobei das erste Paar Streckwalzen (70, 78) zumindest einer der ersten Zugwalzeneinrichtung (64) und der zweiten Zugwalzeneinrichtung (66) der ersten Zugwalzenvorrichtung (28) unter einem Winkel zur Horizontalen angeordnet ist, um eine seitliche Spannung auf das Glasband (14) auszuüben.

3. Glasherstellungseinrichtung nach Anspruch 1 oder 2, wobei das erste Paar Streckwalzen (114, 120) zumindest einer der ersten Zugwalzeneinrichtung (110) und der zweiten Zugwalzeneinrichtung (112) der zweiten Zugwalzenvorrichtung (30) im Wesentlichen horizontal angeordnet ist.

4. Glasherstellungseinrichtung nach einem der Ansprüche 1 - 3, wobei die Steuervorrichtung (68) dazu ausgelegt ist, die erste Zugwalzeneinrichtung (110) der zweiten Zugwalzenvorrichtung (30) so zu betreiben, dass das erste Paar Antriebswalzen (114) der ersten Zugwalzeneinrichtung (110) der zweiten Zugwalzenvorrichtung (30) an einem Eingang des Kettenlinienbereichs (60) eine aufwärtige Zugkraft auf das Glasband (14) bereitstellt.

5. Glasherstellungseinrichtung nach einem der Ansprüche 1 - 4, wobei die Steuervorrichtung (68) dazu ausgelegt ist, die erste Zugwalzeneinrichtung (64) der ersten Zugwalzenvorrichtung (28) so zu betreiben, dass sich das erste Paar Antriebswalzen (70) der ersten Zugeinrichtung (64) der ersten Zugwalzenvorrichtung (28) mit einem im Wesentlichen konstanten Drehmoment dreht.

6. Glasherstellungseinrichtung nach einem der Ansprüche 1 - 5, wobei die Steuervorrichtung (68) dazu ausgelegt ist, die zweite Zugwalzeneinrichtung (66) der ersten Zugwalzenvorrichtung (28) so zu betreiben, dass sich das erste Paar Antriebswalzen (78) der zweiten Zugeinrichtung (66) der ersten Zugwalzenvorrichtung (28) mit einer im Wesentlichen konstanten Winkelgeschwindigkeit dreht.

7. Verfahren zum Herstellen eines Glasbands (14) in einer Glasherstellungseinrichtung (10), insbesondere in einer Downdraw-Fusion-Einrichtung, wobei das Verfahren Folgendes umfasst:

Bereitstellen einer ersten Zugwalzenvorrichtung (28), die sich in einem Streckbereich (140) der Glasherstellungseinrichtung (10) befindet;
Bereitstellen einer zweiten Zugwalzenvorrichtung (30), die sich in einem Kettenlinienbereich (60) der Glasherstellungseinrichtung (10) stromabwärts der ersten Zugwalzenvorrichtung (28) befindet, wobei die zweite Zugwalzenvorrichtung (30) Folgendes umfasst:

eine erste Zugwalzeneinrichtung (110), die ein erstes Paar Streckwalzen (114) umfasst, die dazu angeordnet und ausgelegt sind, mit der ersten Kante (16) des Glasbands (14) zusammenzuwirken und Gewicht des Glasbands (14) zu stützen; und
eine zweite Zugwalzeneinrichtung (112), die sich stromabwärts der ersten Zugeinrichtung (110) der zweiten Zugwalzenvorrichtung (30) befindet, die ein erstes Paar Antriebswalzen (120) umfasst, die dazu ausgelegt sind, mit der ersten Kante (16) des Glasbands (14) zusammenzuwirken und Gewicht des Glasbands (14) zu stützen;

Steuern zumindest der zweiten Zugwalzeneinrichtung (112) der zweiten Zugwalzenvorrichtung (30) anhand einer Steuervorrichtung (68), sodass das erste Paar Antriebswalzen der zweiten Zugwalzeneinrichtung (112) der zweiten Zugwalzenvorrichtung (30) an einem Ausgang des Kettenlinienbereichs (60) eine abwärtige Zugkraft auf das Glasband (14) bereitstellt;
Ausbilden des Glasbands (14).

8. Verfahren nach Anspruch 7, wobei die erste Zugwalzenvorrichtung (28) Folgendes umfasst:

eine erste Zugwalzeneinrichtung (64), die ein erstes Paar Streckwalzen (70) umfasst, die dazu angeordnet und ausgelegt sind, die erste Kante (16) des Glasbands (14) von der Formvorrichtung entlang eines Streckwegs (74), der sich quer zur Breite des Glasbands (14) erstreckt, zu strecken; und
eine zweite Zugwalzeneinrichtung (66) stromabwärts der ersten Zugwalzeneinrichtung der ersten Zugwalzenvorrichtung (28), die ein erstes Paar Streckwalzen (78) umfasst, die dazu angeordnet und ausgelegt sind die erste Kante (16) des Glasbands (14) entlang des Streckwegs (74) zu ziehen.

9. Verfahren nach Anspruch 8, umfassend das Steuern der ersten Zugwalzeneinrichtung (64) der ersten Zugwalzenvorrichtung (28) anhand der Steuervorrichtung (68), sodass sich das erste Paar Antriebswalzen der ersten Zugeinrichtung (64) der ersten Zugwalzenvorrichtung (28) mit einem im Wesentlichen konstanten Drehmoment dreht.

**10.** Verfahren nach Anspruch 8 oder Anspruch 9, umfassend das Steuern der zweiten Zugwalzeneinrichtung (66) der ersten Zugwalzenvorrichtung (28) anhand der Steuervorrichtung (68), sodass sich das erste Paar Antriebswalzen der zweiten Zugeinrichtung (66) der ersten Zugwalzenvorrichtung (28) mit einer im Wesentlichen konstanten Winkelgeschwindigkeit dreht.

**11.** Verfahren nach einem der Ansprüche 8 - 10, wobei das erste Paar Streckwalzen (70, 78) zumindest einer der ersten Zugwalzeneinrichtung (64) und der zweiten Zugwalzeneinrichtung (66) der ersten Zugwalzenvorrichtung (28) unter einem Winkel zur Horizontalen angeordnet sind, um eine seitliche Spannung auf das Glasband (14) auszuüben.

**12.** Verfahren nach einem der Ansprüche 8 - 11, wobei das erste Paar Streckwalzen (114, 120) zumindest einer der ersten Zugwalzeneinrichtung (110) und der zweite Zugwalzeneinrichtung (112) der zweiten Zugwalzenvorrichtung (30) im Wesentlichen horizontal angeordnet ist.

**13.** Verfahren nach Anspruch 7, umfassend das Steuern der ersten Zugwalzeneinrichtung (110) der zweiten Zugwalzenvorrichtung (30) anhand der Steuervorrichtung (68), sodass das erste Paar Antriebswalzen der ersten Zugwalzeneinrichtung (110) der zweiten Zugwalzenvorrichtung (30) an einem Eingang des Kettenlinienbereichs (60) eine aufwärtige Zugkraft auf das Glasband (14) bereitstellt.

## Revendications

**1.** Appareil de fabrication de verre (10), à savoir appareil d'étirage vers le bas, comprenant :

un dispositif de formage (12) conçu pour produire un ruban de verre (14) présentant une largeur s'étendant entre un premier bord (16) et un deuxième bord opposé (18) du ruban de verre (14) ;
un premier dispositif à rouleaux de traction (28) situé dans une zone d'étirage (140) de l'appareil de fabrication de verre (10), le premier dispositif à rouleaux de traction (28) comprenant :

un premier appareil à rouleaux de traction (64) comprenant une première paire de rouleaux d'étirage (70) agencés et conçus pour étirer le premier bord (16) du ruban de verre (14) à partir du dispositif de formage le long d'une trajectoire d'étirage (74) s'étendant transversalement à la largeur du ruban de verre (14) ; et
un deuxième appareil à rouleaux de traction (66) situé en aval du premier appareil à rouleaux de traction (64) et comprenant une première paire de rouleaux d'étirage (78) agencés et conçus pour étirer le premier bord (16) du ruban de verre (14) le long de la trajectoire d'étirage (74) ; et

un deuxième dispositif à rouleaux de traction (30) situé dans une zone de caténaire (60) de l'appareil de fabrication de verre (10) en aval du premier dispositif à rouleaux de traction (28), le deuxième dispositif à rouleaux de traction (30) comprenant :

un premier appareil à rouleaux de traction (110) comprenant une première paire de rouleaux d'étirage (114) agencés et conçus pour entrer en interaction avec le premier bord (16) du ruban de verre (14) et supporter le poids du ruban de verre (14) ; et
un deuxième appareil à rouleaux de traction (112) situé en aval du premier appareil de traction (110) du deuxième dispositif à rouleaux de traction (30) et comprenant une première paire de rouleaux d'entraînement (120) conçus pour entrer en interaction avec le premier bord (16) du ruban de verre (14) et supporter le poids du ruban de verre (14) ; et

un dispositif de commande (68) conçu pour faire fonctionner au moins le deuxième appareil à rouleaux de traction (112) du deuxième dispositif à rouleaux de traction (30) de telle sorte que la première paire de rouleaux d'entraînement (120) du deuxième appareil à rouleaux de traction (112) du deuxième dispositif à rouleaux de traction (30) produise une force de traction vers le bas sur le ruban de verre (14) au niveau d'une sortie de la zone de caténaire (60).

**2.** Appareil de fabrication de verre selon la revendication 1, dans lequel la première paire de rouleaux d'étirage (70, 78) du premier appareil à rouleaux de traction (64) et/ou du deuxième appareil à rouleaux de traction (66) du premier dispositif à rouleaux de traction (28) est/sont agencée(s) suivant un angle par rapport à l'horizontale pour appliquer une tension latérale sur le ruban de verre (14).

3. Appareil de fabrication de verre selon la revendication 1 ou 2, dans lequel la première paire de rouleaux d'étirage (114, 120) du premier appareil à rouleaux de traction (110) et/ou du deuxième appareil à rouleaux de traction (112) du deuxième dispositif à rouleaux de traction (30) est/sont agencée(s) sensiblement horizontalement.

4. Appareil de fabrication de verre selon l'une quelconque des revendications 1 à 3, dans lequel le dispositif de commande (68) est conçu pour faire fonctionner le premier appareil à rouleaux de traction (110) du deuxième dispositif à rouleaux de traction (30) de telle sorte que la première paire de rouleaux d'entraînement (114) du premier appareil à rouleaux de traction (110) du deuxième dispositif à rouleaux de traction (30) produise une force de traction vers le haut sur le ruban de verre (14) au niveau d'une entrée de la zone de caténaire (60).

5. Appareil de fabrication de verre selon l'une quelconque des revendications 1 à 4, dans lequel le dispositif de commande (68) est conçu pour faire fonctionner le premier appareil à rouleaux de traction (64) du premier dispositif à rouleaux de traction (28) de telle sorte que la première paire de rouleaux d'entraînement (70) du premier appareil à rouleaux de traction (64) du premier dispositif à rouleaux de traction (28) tourne à un couple sensiblement constant.

6. Appareil de fabrication de verre selon l'une quelconque des revendications 1 à 5, dans lequel le dispositif de commande (68) est conçu pour faire fonctionner le deuxième appareil à rouleaux de traction (66) du premier dispositif à rouleaux de traction (28) de telle sorte que la première paire de rouleaux d'entraînement (78) du deuxième appareil à rouleaux de traction (66) du premier dispositif à rouleaux de traction (28) tourne à une vitesse angulaire sensiblement constante.

7. Procédé de fabrication d'un ruban de verre (14) dans un appareil de fabrication de verre (10), à savoir appareil d'étirage vers le bas, le procédé consistant à :

   fournir un premier dispositif à rouleaux de traction (28) situé dans une zone d'étirage (140) de l'appareil de fabrication de verre (10),
   fournir un deuxième dispositif à rouleaux de traction (30) situé dans une zone de caténaire (60) de l'appareil de fabrication de verre (10) en aval du premier dispositif à rouleaux de traction (28), le deuxième dispositif à rouleaux de traction (30) comprenant :

   un premier appareil à rouleaux de traction (110) comprenant une première paire de rouleaux d'étirage (114) agencés et conçus pour entrer en interaction avec le premier bord (16) du ruban de verre (14) et supporter le poids du ruban de verre (14) ; et
   un deuxième appareil à rouleaux de traction (112) situé en aval du premier appareil à rouleaux de traction (110) du deuxième dispositif à rouleaux de traction (30) et comprenant une première paire de rouleaux d'entraînement (120) conçus pour entrer en interaction avec le premier bord (16) du ruban de verre (14) et supporter le poids du ruban de verre (14) ;

   commander au moins le deuxième appareil à rouleaux de traction (112) du deuxième dispositif à rouleaux de traction (30) en utilisant un dispositif de commande (68) de telle sorte que la première paire de rouleaux d'entraînement du deuxième appareil à rouleaux de traction (112) du deuxième dispositif à rouleaux de traction (30) produise une force de traction vers le bas sur le ruban de verre (14) au niveau d'une sortie de la zone de caténaire (60) ;
   former le ruban de verre (14).

8. Procédé selon la revendication 7, dans lequel le premier dispositif à rouleaux de traction (28) comprend :

   un premier appareil à rouleaux de traction (64) comprenant une première paire de rouleaux d'étirage (70) agencés et conçus pour étirer le premier bord (16) du ruban de verre (14) à partir du dispositif de formage le long d'une trajectoire d'étirage (74) s'étendant transversalement à la largeur du ruban de verre (14) ; et
   un deuxième appareil à rouleaux de traction (66) situé en aval du premier appareil à rouleaux de traction du premier dispositif à rouleaux de traction (28) et comprenant une première paire de rouleaux d'étirage (78) agencés et conçus pour étirer le premier bord (16) du ruban de verre (14) le long de la trajectoire d'étirage (74).

9. Procédé selon la revendication 8, comprenant la commande du premier appareil à rouleaux de traction (64) du premier dispositif à rouleaux de traction (28) en utilisant le dispositif de commande (68) de telle sorte que la première paire de rouleaux d'entraînement du premier appareil de traction (64) du premier dispositif à rouleaux de traction (28) tourne à un couple sensiblement constant.

**10.** Procédé selon la revendication 8 ou 9, comprenant la commande du deuxième appareil à rouleaux de traction (66) du premier dispositif à rouleaux de traction (28) en utilisant le dispositif de commande (68) de telle sorte que la première paire de rouleaux d'entraînement du deuxième appareil de traction (66) du premier dispositif à rouleaux de traction (28) tourne à une vitesse angulaire sensiblement constante.

**11.** Procédé selon l'une quelconque des revendications 8 à 10, dans lequel la première paire de rouleaux d'étirage (70, 78) du premier appareil à rouleaux de traction (64) et/ou du deuxième appareil à rouleaux de traction (66) du premier dispositif à rouleaux de traction (28) est/sont agencée (s) suivant un angle par rapport à l'horizontale pour appliquer une tension latérale sur le ruban de verre (14).

**12.** Procédé selon l'une quelconque des revendications 8 à 11, dans lequel la première paire de rouleaux d'étirage (114, 120) du premier appareil à rouleaux de traction (110) et/ou du deuxième appareil à rouleaux de traction (112) du deuxième dispositif à rouleaux de traction (30) est/sont agencée(s) sensiblement horizontalement.

**13.** Procédé selon la revendication 7, comprenant la commande du premier appareil à rouleaux de traction (110) du deuxième dispositif à rouleaux de traction (30) en utilisant le dispositif de commande (68) de telle sorte que la première paire de rouleaux d'entraînement du premier appareil à rouleaux de traction (110) du deuxième dispositif à rouleaux de traction (30) produise une force de traction vers le haut sur le ruban de verre (14) au niveau d'une entrée de la zone de caténaire (60).

*FIG. 1*

FIG. 2

FIG. 3

*FIG. 4*

ROLL APPARATUS 64 ↑

ROLL APPARATUS 66 ↓

ROLL APPARATUS 110 ↑

ROLL APPARATUS 112 ↓

VERTICAL TENSION OF THE RIBBON

DISTANCE FROM ROOT

*FIG. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014051984 A1
- US 20130133371 A1
- US 20130319050 A1